# EUROPEAN PATENT SPECIFICATION

(11) **EP 2 469 686 B1**
(45) Date of publication and mention of the grant of the patent: **01.04.2015**
(21) Application number: 10196733.9
(22) Date of filing: 23.12.2010
(51) Int. Cl.: H02J 1/10

(54) **System and method for hot-swapping of power sources in portable electronic devices**
System und Verfahren für Hot-Swapping von Leistungsquellen in tragbaren elektronischen Geräten
Système et procédé de remplacement à chaud de sources d'alimentation dans des dispositifs électroniques portables

(43) Date of publication of application: 27.06.2012
(73) Proprietor: BlackBerry Limited, Waterloo, ON N2K 0A7 (CA)
(72) Inventor: Sutarwala, Taha Shabbir Husain, Waterloo Ontario N2L 5R9 (CA); Rich, David Gerard, Waterloo Ontario N2L 5R9 (CA)
(74) Representative: Moore, Barry

(56) References cited:
- CN-A- 101 098 080
- US-A1- 2003 138 676
- US-A1- 2004 174 072
- US-A1- 2005 110 468
- US-A1- 2006 008 687
- US-A1- 2006 234 116

## Description

The present disclosure is generally directed at portable electronic devices and more specifically at a system and method for hot-swapping of power sources in portable electronic devices.

"Hot-swapping" is a technique whereby a user of a portable electronic device can remove and replace (i.e., "swap") a power source or supply while the portable electronic device remains on and active (i.e., "hot"). ("Hot-swapping" may have a more general meaning of connection or disconnection of system components without disrupting system operations, but as used herein, the term will be applied to connection or disconnection of power-related components.) Hot-swapping enables users to continue to use the portable electronic device (such as a smart phone, portable computer, computing tablet, remote control, accessory charger, and the like) while the power source is being replaced. In some portable electronic devices, hot-swapping is not a viable option, and removal and replacement of a power source or supply results in a shutdown of the device.

U.S. Published Patent Application No. 2006/008687 discloses a portable storage device that stores a hydrogen fuel source. The storage device includes a bladder that contains the hydrogen fuel source and conforms to the volume of the hydrogen fuel source. A housing provides mechanical protection for the bladder. The storage device also includes a connector that interfaces with a mating connector to permit transfer of the fuel source between the bladder and a device that includes the mating connector. The device may be a portable electronics device such as a laptop computer. U.S. Published Patent Application No. 2006/008687 also discloses refillable hydrogen fuel source storage devices and systems. The hot swappable fuel storage systems allow a portable hydrogen fuel source storage device to be removed from a fuel processor or electronics device it provides the hydrogen fuel source to, without shutting down the receiving device or without compromising hydrogen fuel source provision.

U.S. Published Patent Application No. 2004/174072 discloses a hybrid power supply including a switching type DC/DC boost type converter that receives energy from a fuel cell and is arranged to deliver the energy to a rechargeable cell, set to provide a fixed output voltage that is less than the full charge voltage of the rechargeable cell. The hybrid power supply includes a circuit including a fuel cell current control that senses fuel cell current, and controls in part operation of the converter to provide constant current discharge on the fuel cell side of the hybrid power supply.

U.S. Published Patent Application No. 2005/110468 discloses a power supply for an electrical load in the form of a Notebook computer. The power supply includes first terminals which extend from the computer for releasably electrically connecting with a first energy storage device in the form of a battery during a first interval. A second energy storage device, in the form a second battery, releasably electrically connects with terminals during a second interval spaced apart from the first interval. This allows power to be supplied to the load during those intervals. A capacitive energy storage device supplies power to the load during a third interval that spans the spacing between the first and the second intervals.

### GENERAL

The disclosure relates to a combination of power sources such as a fuel cell system and a battery that supply power to a portable electronic device such as a mobile communication device or a charging accessory. In one form the disclosure may be directed at a system and method that enable hot-swapping of either the replaceable fuel tank or the battery without shutting down the portable electronic device.

As a result, users can continue to use the portable electronic device while a replaceable fuel tank or the battery is being replaced. If one power source is exhausted or low, components in the portable electronic device may continue to consume power from another power source. It is reasonable to expect that the replaceable fuel tank will be replaced more often than the battery. The user may be warned that the replaceable fuel tank (or the battery) is due to be replaced.

The following disclosure presents apparatus and techniques that may enable hot-swapping in portable electronic devices. The apparatus and techniques may be useful for portable electronic devices that are handheld, that is, sized to be held or carried in a human hand. The apparatus and techniques may be especially useful with portable electronic devices that include a fuel cell as one of the power sources. A fuel cell generates energy when a fuel, typically stored in a fuel tank, combines with oxygen to produce electric current and chemical by-products (such as water). In typical embodiments, the fuel tank may hold methanol, ethanol, hydrogen (possibly from hydrides), butane or other fuels. Many challenges apply to making fuel cell technologies applicable to portable electronic devices—such as miniaturization and management of fuel cell by-products—that are not significant challenges to fuel cells used to power some larger devices.

Fuel cells are projected to be a major power source for portable electronic devices, because a fuel cell system may provide higher energy densities than conventional power sources, such as a battery. In portable electronic devices, a typical battery could be a lithium-ion battery or a zinc-based battery or a battery based upon another chemistry. In general, different kinds of batteries may differ in various specifications or performance qualities, such as capacity or recharge times.

As fuel cell technology becomes available to portable electronic devices, it is unlikely that the fuel tanks will be easily refillable once depleted with fuel. In other words, a reasonable expectation is that the fuel tank would ordinarily be replaced when the fuel is low or depleted. In some fuel cell systems, the fuel cell tank may include a replaceable cartridge or other fuel-holding component. In other fuel cell systems, the entire fuel tank (perhaps including associated apparatus that delivers the fuel from the tank to the fuel cell) may be replaceable. In other fuel cell systems, the fuel cell and fuel tank may employ a unitary construction, such that removal or replacement of the fuel tank entails removal or replacement of the fuel cell as well. This disclosure may be applicable to any such fuel cell systems and variants thereof. (As used herein, the term "removable fuel tank" or "replaceable fuel tank" may apply to any removable fuel cell component, including a cartridge, a portion of the tank, the entire tank, the entire fuel-cell-fuel-tank system, and any variants thereof.) In general, the process of replacing fuel may ordinarily result in shutting down the fuel cell, and consequently, the fuel cell would not be generating electricity and supplying power. Further, in some portable electronic devices, recovery from a shutdown entails execution of power-up procedures (such as diagnostics, profile loading and the like), which may be time-consuming.

As discussed in more detail below, a portable electronic device may include one power source in the form of a fuel cell system (which includes the fuel cell, fuel tank and associated apparatus) and another power source such as a conventional battery. The power sources may cooperate to supply power to the portable electronic device during ordinary operation. The power sources also cooperate to enable hot-swapping, which may include swapping the battery or swapping the removable fuel tank. During such hot-swapping, the portable electronic device may remain on during the swap.

### BRIEF DESCRIPTION OF THE DRAWINGS

Embodiments of the present disclosure will now be described, by way of example only, with reference to the attached Figures, wherein:

Figure 1 is a schematic diagram of a portable electronic device;

Figure 2 is a rear perspective view of the portable electronic device with illustrative housings for a battery and a replaceable fuel tank in a closed position;

Figure 3 is a rear perspective view of the portable electronic device with illustrative housings for a battery and a replaceable fuel tank in an open or accessible position;

Figure 4 is a schematic block diagram of the portable electronic device; and

Figure 5 is a flowchart outlining an illustrative method that enables hot-swapping.

### DETAILED DESCRIPTION

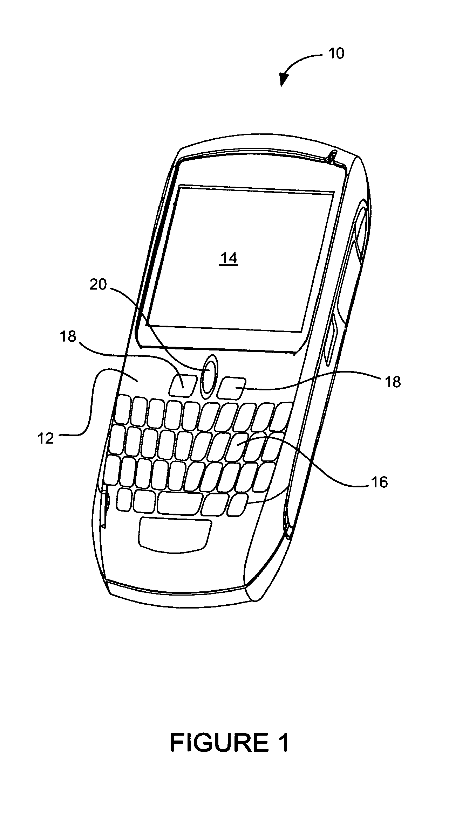

Turning to Figure 1, a schematic diagram of an illustrative portable electronic device 10 is shown. The portable electronic device 10, such as a mobile communication device, has a body 12 which includes a display screen 14, a keyboard/keypad 16, a set of buttons 18 and a trackball 20. It will be understood that the trackball 20 can also be a joystick, scroll wheel, roller wheel, trackball or touchpad or the like, or another button. The device 10 includes other parts which are not shown or described. The device may be sized to be held or carried in a human hand such that the device may be seen as a handheld device.

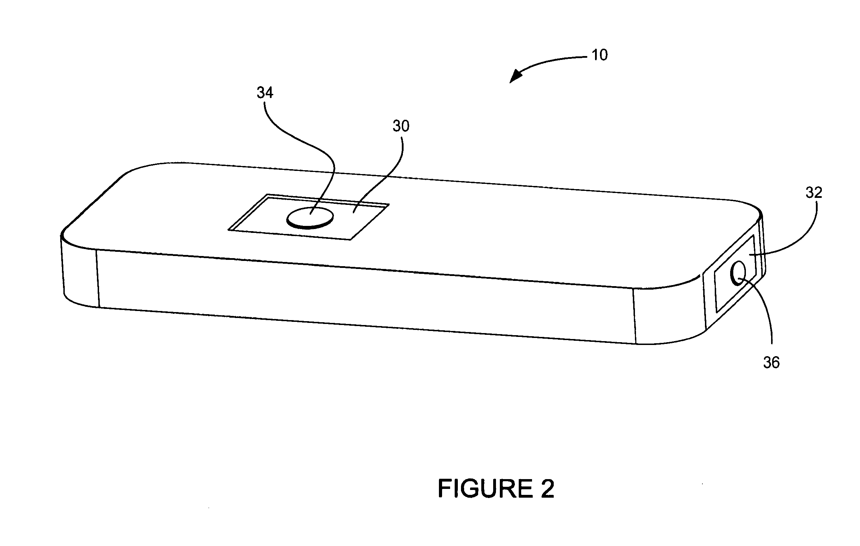

Turning to Figure 2, a rear perspective view of the portable electronic device 10 is provided. The portable electronic device 10 includes a first chamber, or compartment, 30 for housing a first power source such as a battery and a second chamber, or compartment, 32 for housing a second power source or part of a second power source such as a fuel tank or fuel tank cartridge. (As used herein, "first" and "second" are used to distinguish elements from one another, and do not indicate which element, if any, is deemed to be the primary or predominant power source for a device.) In one embodiment, the first compartment 30 includes a quick release mechanism such as a clickable harness and includes a button 34 which is used to unlock or disengage the compartment from the mobile communication device 10 (which may be similar to a DVD harness in a laptop computer). Also, the second compartment 32 may include a quick release mechanism such as a clickable harness and may include a button 36 for unlocking or disengaging the secondary compartment from the body 12 of the portable electronic device 10. In alternative embodiments, only one of compartments 30 or 32 may include the quick release mechanism which allows the compartment to be quickly disengaged from the device so that the first or second power source (or part thereof) may be easily removed or replaced. Furthermore, either compartment can be implemented as a sliding door, with or without a lock, or the power source can be clicked in and out (which may be similar to an SD card with a camera). In a typical implementation, the portable electronic device 10 may be on and operational while either compartment is accessed and the power source housed therein is replaced. In some implementations, one or more of the compartment locks may be under the control of a processor.

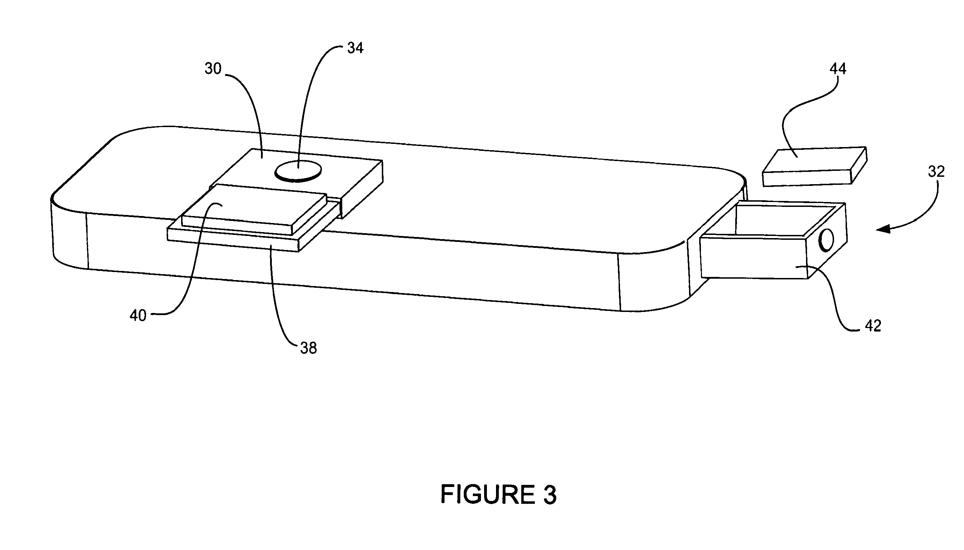

Figure 3 provides a rear perspective view of the portable electronic device with both the first compartment 30 and the second compartment 32 in an open or accessible position. With respect to the first compartment 30, after the button 34 is pressed, or clicked, the compartment rises and a battery harness 38 slides out from the compartment 30. For purposes of illustration, the first compartment 30 houses a conventional battery 40 while the second compartment 32 houses a fuel tank cartridge 44. With the first component in the open position, the battery 40 can then be removed from the harness 38 and replaced. With respect to the second compartment 32, after the button 36 is pressed, a harness 42 slides out of the compartment 32 so that the empty fuel tank cartridge 44 can be replaced. In normal operation, only one of the compartments will be opened at one time so that the device remains powered by the other power source not being replaced.

In an alternative embodiment, the first compartment 30 can be integrated within the portable electronic device 10 such that the compartment 30 is not accessible and the power source housed therein is not removable. In such an embodiment, the non-removable power source may be a rechargeable battery.

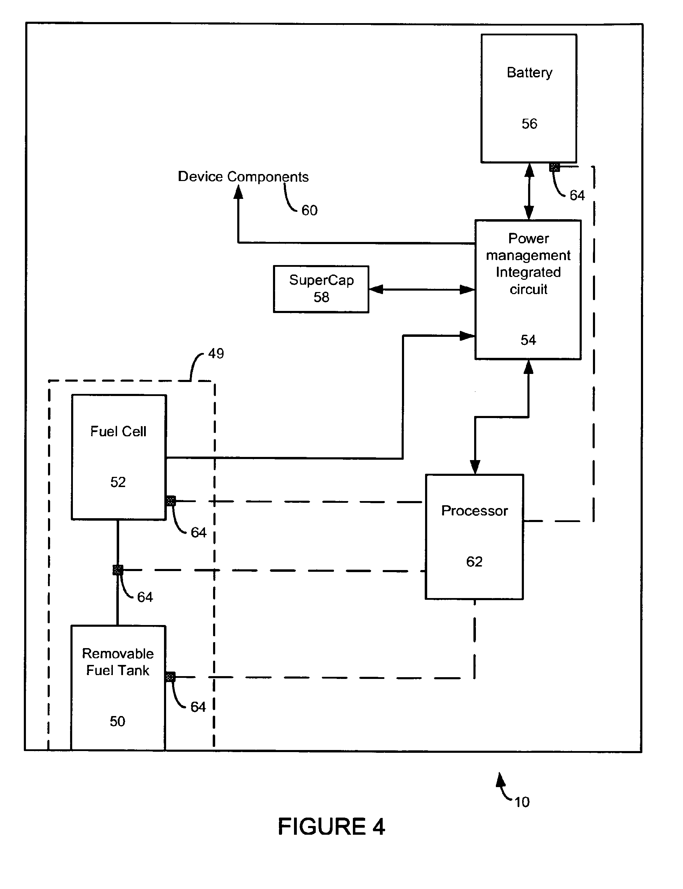

Turning to Figure 4, block diagram of an illustrative portable electronic device 10 is shown. Within the portable electronic device 10 is an embodiment of an apparatus for powering the portable electronic device so that power sources within the device can be replenished or replaced without interruption or shutdown. In some cases, the portable electronic device 10 may always be on (i.e., operating without shutdown for an indefinite period of time).

The apparatus includes a fuel cell system 49 which may include a fuel cell 52 and a removable fuel tank 50 which supplies fuel to the fuel cell 52. In the embodiment of Figure 4, the removable fuel tank 50 is depicted for clarity as an element distinct from the fuel cell 52, which need not be removable. Flow of the fuel between the fuel tank 50 and the fuel cell 52 may be controlled by microfluidics although other flow control methods are contemplated. Power supplied by or generated by the fuel cell 52 may be transmitted to a power management integrated circuit (PMIC) 54 which can then regulate the power and deliver it to other power-consuming components of device 10. Power-consuming elements may include device components 60 such as the display screen 14, or may include elements that are capable of consuming (or storing) power as well as supplying power, such as a rechargeable battery 56 or a super capacitor (or supercap) 58. Control of the PMIC 54 may be via a processor 62, such as a central processing unit (CPU). A set of sensors 64, located at various locations within the portable electronic device 10, is communicatively connected with the processor 62 to transmit various informational data for processing by the processor 62 to control the PMIC 54. The processor 62 or PMIC 54 may also control the operations of the fuel cell system. Although depicted in Figure 4 as distinct elements, the processor 62 and PMIC 54 may be combined in a unitary element. Further, the PMIC 54 may in some implementations itself be a processor, receiving inputs and making determinations and decisions as a function of the inputs. In an embodiment, power may be supplied to the device components 60 by any power source, such as the power source or battery 56, the fuel cell 52 or the supercap 58, typically under the control of the PMIC 54 or the processor 62 or both.

In one embodiment, the power supplied by the battery 56 is transmitted to the device components 60 via the PMIC 54. When the processor 62 senses that the power level of the battery 56 is low (via one of the sensors 64), the processor 62 can start the fuel cell 52 or direct power supplied by the fuel cell 52 to the battery 56. In this way, the fuel cell 52 can recharge the battery 56. Similarly, the processor 62 can direct power supplied by the fuel cell 52 to the supercap 58.

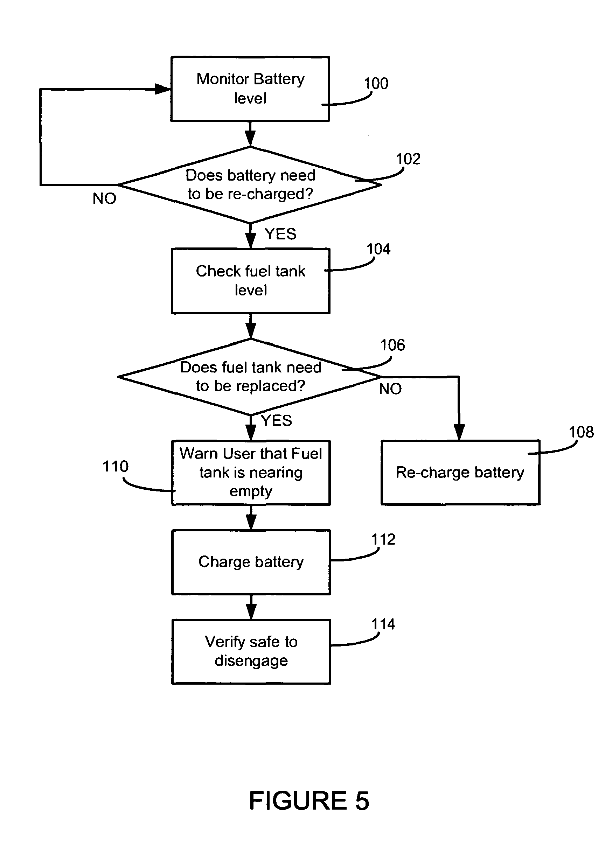

Turning to Figure 5, a flowchart outlining a method of enabling hot-swapping in a portable electronic device is shown. In typical operation, the amount of power stored in the battery would be regularly checked to verify that there is sufficient power in the battery to operate the device, especially when high power consumption applications are being executed. Similarly, the level of fuel remaining in the fuel tank would also be regularly monitored. In a typical scenario, a conventional battery 56 would (unless recharged) run out of power before a fuel tank 50 would run out of fuel. A conventional battery, however, can be recharged without removal from the device 10, but this convenience might not be applicable for a removable fuel tank 50. Consequently, it may be reasonable to expect that the battery 56 would be replaced less often than the removable fuel tank 50.

In operation, the capacity level remaining in the battery 56 is monitored 100 as described previously. A determination 102 is then made (typically by the processor 62 or the PMIC 54 or both) whether the battery 56 needs recharging. In one embodiment, the processor 62 retrieves this information from one of the sensors 64 to determine the power level remaining in the battery 56. If the power level is higher than a particular value, such as 25% battery life remaining, the processor 62 continues to monitor 100 the battery power level. Otherwise, if the battery power level is lower than the particular value, the level of fuel remaining in the fuel tank is checked 104. This check can be performed by the processor 62 retrieving a signal from the fuel tank sensor 64 indicating the level of fuel remaining. A check 106 is then performed to determine if the fuel tank is to be replaced. If the amount of fuel remaining is above a particular value, the fuel cell 52 may be started or power produced by the fuel cell 52 may be directed to the battery 56 for recharging 108 the battery 56.

This is one typical scenario in which the processor may determine that the fuel tank is running low on fuel and should be replaced 106. (Optionally, the processor 62 may determine that the battery 56 may be recharged in full or in part even if fuel is running low.) If the fuel is running low, or lower than the particular value, the processor 62 may generate a warning signal to be transmitted 110 to the user indicating that the fuel tank needs to be replaced soon. The warning may be conveyed by a visual notice on the display screen 14, or audibly, or by vibration or by any other technique or combination thereof. In some embodiments, the user may be advised in the warning as to how much estimated usage time is available for the removable fuel tank, or where to obtain a replacement fuel tank or other information. Alternatively, the warning signal can be transmitted if the fuel tank level is found to be running low during a regular check of the fuel level. In other words, the processor 62 may, but need not, determine that whether the fuel level in the fuel tank is "running low" is a function of the battery power level.

After transmission of the warning, the battery is then re-charged by the fuel cell. This re-charging can be performed until the fuel tank is drained or until the power level of the rechargeable battery is above the particular level or to any level about the particular level. In this scenario, the user can replace the removeable fuel tank before the fuel tank is fully drained. Assuming the user has not delayed attending to the power demands of the portable electronic device 10 for too long (thereby effectively depleting power from all of the power sources), the user may replace the removeable fuel tank 50 without a shutdown of the device.

After the battery has received recharging and is capable of independently powering the portable electronic device, the processor may transmit a message to the user (e.g. a visual notice on display screen 14) verifying 114 that the fuel tank can then be replaced without a shutdown of the device required.

For example, if the battery 56 needs to be replaced, once the processor 62 verifies that the portable electronic device 10 is being powered by another power source, such as the fuel cell system or the supercap 58, the processor 62 can transmit a message to the user (e.g. a visual notice on display screen 14) notifying the user that the battery 56 can then be replaced without a shutdown of the device. When confirming that electronic device 10 is being powered by another power source, the processor 62 determines whether the other power source is capable of supplying power for a reasonable time during which a hot-swap may be performed. The processor 62 may confirm that the portable electronic device 10 is being powered by another power source—thereby enabling hot-swapping the replaceable power source—by any technique, such as checking the voltage of the power source or comparing the actual or estimated energy demand with the energy that can be supplied by the power source. After confirming that hot-swapping may be performed, the message may verify that the user may replace the fuel tank without shutting down the device 10.

In one embodiment, the processor 62 transmits a signal to a second compartment locking mechanism to allow the second compartment 32 to be made accessible.

In another embodiment, a check can be performed to determine if power being supplied to the device can be reduced to enable hot-swapping. The processor 62 may, for example, transmit a message to the user recommending shutting down some or all high-power-consumption applications. The processor 62 may also shut down some high-power-consumption applications automatically. In a further variation, the processor 62 may transmit a message to the user notifying the user that some or all high-power-consumption applications may be unavailable until the removable fuel tank is replaced.

In an additional embodiment, the processes described herein may be embodied in instructions that cause a processor (such as but not necessarily limited to processor 62) to carry out some of the functions described herein. The instructions may be machine-readable (i.e. computer readable) and may be stored in a tangible storage medium, such as a hard disk, floppy disk, optical disk, or memory storage element.

In a further embodiment, if during operation of the portable electronic device, it is sensed that the battery needs replacing, the processor 62 may transmit a signal to the user notifying the user to replace the battery. A battery may be subject to replacement if, for example, the battery is old, or has been worn out, or has been damaged by an impact, or has been subjected to harmful heating, or is subject to product recall, or has become incapable of supplying power effectively for any reason or reasons. In such a case, the hot-swap may be executed with the fuel cell or the supercap supplying power while the battery is replaced. The processor may optionally transmit a message to the user verifying that the portable electronic device can operate until the battery is replaced. Optionally, the processor may transmit a signal to a locking mechanism to allow the first compartment 30 (which houses the battery) to be made accessible.

In an alternative embodiment, a portable electronic device powered (at least in part) by a fuel cell system can continue to operate while a replaceable fuel tank is replaced. Similarly, in some embodiments, the portable electronic device can continue to operate while a battery is replaced. Implementation of one or more embodiments may realize one or more further advantages. One prospective benefit is that fuel cells may become more viable for portable electronic devices in general and handheld devices in particular. Fuel cells may supply a convenience to the user by freeing the user from a need for frequent battery recharging and the attendant inconveniences (such as finding a recharging station or a power outlet). In exchange for this convenience, users may carry one or more replaceable fuel tanks. By applying one or more embodiments, users can have continued use of their portable electronic devices without shutting the devices down for replacement of a replaceable fuel tank (or battery).

A further advantage of the described system is that the apparatus is easy to use and does not require any complicated connections to be made. Many of the significant parts of the process are automated and require no command or other interaction from the user.

In addition, one or more embodiments may enable fuel cell systems to work with demands associated with portable electronic devices. As was noted, it may be desirable for some such devices to be always activated. Further, many portable electronic devices have a variety of power demands, which may include high-power-consumption applications, and the power demands may affect how power is managed to make a hot-swap feasible. The smaller size of a portable electronic device, combined with the power demands attendant to such devices, are further compatible with the concepts described herein, in that they enable a user to conveniently replace a removable fuel tank with reduced interruption.

In those embodiments in which one or more compartments housing removable fuel tank (or the battery) can be locked or unlocked under the control of the processor, a further benefit may be realized in that there is less risk of a component being removed prematurely or accidentally. As was discussed above, the processor may perform various operations associated with energy management when a fuel tank is running low. This energy management may be enhanced if the user is deterred from removing the removable fuel tank early. Further, locking may prevent the removable fuel tank from being knocked out of the device due to an impact, or removed inadvertently.

In the preceding description, for purposes of explanation, numerous details are set forth in order to provide a thorough understanding of the embodiments of the disclosure. However, it will be apparent to one skilled in the art that these specific details are not required in order to practice the disclosure. In other instances, well-known electrical structures and circuits are shown in block diagram form in order not to obscure the disclosure. For example, specific details are not provided as to whether the embodiments of the disclosure described herein are implemented as a software routine, hardware circuit, firmware, or a combination thereof.

The above-described embodiments of the disclosure are intended to be examples only. Alterations, modifications and variations can be effected to the particular embodiments by those of skill in the art without departing from the scope of the disclosure, which is defined solely by the claims appended hereto.

## Claims

1. A method of enabling hot swapping of power sources in a portable electronic device (10) having at least a rechargeable battery (56) and a fuel cell system (49) acting as power sources, comprising:
determining the battery power level is below a particular value;
determining a fuel tank (50) of the fuel cell system (49) should be replaced;
recharging the battery (56) using the fuel cell system (49);
confirming that the portable electronic device (10) is being powered by the rechargeable battery (56);
transmitting, via a processor (62), an indication that the fuel tank (50) requiring replacement may be replaced without shutting down the portable electronic device (10); and
transmitting a signal to a compartment (32) housing the fuel tank (44, 50) requiring replacement to make the compartment (32) accessible.

2. The method of Claim 1 wherein the rechargeable battery (56) is recharged by the fuel cell system (49) until the fuel tank (50) is drained.

3. The method of Claim 1 wherein the rechargeable battery (56) is recharged by the fuel cell system (49) until the power level of the battery is above the particular value.

4. The method of Claim 1 wherein the determining comprises:
sensing that a fuel level within the fuel tank (50) in the fuel cell system (49) is below a particular level.

5. The method of Claim 2 wherein the confirming comprises:
verifying that the portable electronic device (10) is being powered by the rechargeable battery (56).

6. The method of any preceding Claim wherein the transmitting an indication comprises:
conveying the indication via a visual notice on a display screen (14), or audibly, or by vibration or by any other technique or combination thereof.

7. A computer readable medium storing computer executable instructions thereon that when executed by a processor in a portable electronic device (10) having at least a rechargeable battery (56) and a fuel cell system (49) cause the device to carry out the method of any preceding claim.

## Patentansprüche

1. Ein Verfahren zum Ermöglichen eines Hot-Swappings von Energiequellen in einer tragbaren elektronischen Vorrichtung (10) mit zumindest einer wiederaufladbaren Batterie (56) und einem Brennstoffzellensystem (49), die als Energiequellen dienen, das aufweist:
Bestimmen, dass der Batterieenergiepegel unter einem bestimmten Wert ist;
Bestimmen, dass ein Brennstofftank (50) des Brennstoffzellensystems (49) ersetzt werden sollte;
Wiederaufladen der Batterie (56) unter Verwendung des Brennstoffzellensystems (49);
Bestätigen, dass die tragbare elektronische Vorrichtung (10) von der wiederaufladbaren Batterie (56) mit Energie versorgt wird;
Senden, über einen Prozessor (62), einer Angabe, dass der Brennstofftank (50), der ein Ersetzen erfordert, ersetzt werden kann, ohne die tragbare elektronische Vorrichtung (10) auszuschalten; und
Senden eines Signals an eine Kammer (32), die den Brennstofftank (44, 50) beinhaltet, der ein Ersetzen erfordert, um die Kammer (32) zugänglich zu machen.

2. Das Verfahren gemäß Anspruch 1, wobei die wiederaufladbare Batterie (56) durch das Brennstoffzellensystem (49) wiederaufgeladen wird, bis der Brennstofftank (50) leer ist.

3. Das Verfahren gemäß Anspruch 1, wobei die wiederaufladbare Batterie (56) durch das Brennstoffzellensystem (49) wiederaufgeladen wird, bis der Energiepegel der Batterie über dem bestimmten Wert ist.

4. Das Verfahren gemäß Anspruch 1, wobei das Bestimmen aufweist:
Erfassen, dass ein Brennstoffpegel in dem Brennstofftank (50) in dem Brennstoffzellensystem (49) unter einem bestimmten Pegel ist.

5. Das Verfahren gemäß Anspruch 2, wobei das Bestätigen aufweist:
Verifizieren, dass die tragbare elektronische Vorrichtung (10) durch die wiederaufladbare Batterie (56) mit Energie versorgt wird.

6. Das Verfahren gemäß einem vorhergehenden Anspruch, wobei das Senden einer Angabe aufweist:
Übermitteln der Angabe über eine visuelle Benachrichtigung auf einem Anzeigebildschirm (14) oder hörbar oder durch Vibration oder durch eine andere Technik oder eine Kombination daraus.

7. Ein computerlesbares Medium, das computerausführbare Anweisungen darauf speichert, die bei Ausführung durch einen Prozessor in einer tragbaren elektronischen Vorrichtungen (10) mit zumindest einer wiederaufladbaren Batterie (56) und einem Brennstoffzellensystem (49) die Vorrichtung veranlassen, das Verfahren gemäß einem vorhergehenden Anspruch auszuführen.

## Revendications

1. Procédé pour permettre le remplacement à chaud de sources d'alimentation dans un dispositif électronique portable (10) ayant au moins une batterie rechargeable (56) et un système de pile à combustible (49) servant de sources d'alimentation, comprenant les étapes consistant à :
déterminer que le niveau de puissance de la batterie est au-dessous d'une valeur particulière ;
déterminer qu'un réservoir de combustible (50) du système de pile à combustible (49) doit être remplacé ;
recharger la batterie (56) à l'aide du système de pile à combustible (49) ;
confirmer que le dispositif électronique portable (10) est alimenté par la batterie rechargeable (56) ;
transmettre, via un processeur (62), une indication que le réservoir de combustible (50) devant être remplacé, peut être remplacé sans arrêter le dispositif électronique portable (10) ; et
transmettre un signal à un compartiment (32) logeant le réservoir de combustible (44, 50) devant être remplacé, pour rendre le compartiment (32) accessible.

2. Procédé selon la revendication 1, dans lequel la batterie rechargeable (56) est rechargée par le système de pile à combustible (49) jusqu'à ce que le réservoir de combustible (50) soit purgé.

3. Procédé selon la revendication 1, dans lequel la batterie rechargeable (56) est rechargée par le système de pile à combustible (49) jusqu'à ce que le niveau de puissance de la batterie soit au-dessus de la valeur particulière.

4. Procédé selon la revendication 1, dans lequel l'étape de détermination comprend l'étape consistant à :
détecter qu'un niveau de combustible à l'intérieur du réservoir de combustible (50) dans le système de pile à combustible (49) est au-dessous d'un niveau particulier.

5. Procédé selon la revendication 2, dans lequel l'étape de confirmation comprend l'étape consistant à :
vérifier que le dispositif électronique portable (10) est alimenté par la batterie rechargeable (56).

6. Procédé selon l'une quelconque des revendications précédentes, dans lequel l'étape consistant à transmettre une indication comprend l'étape consistant à :
transporter l'indication via une notification visuelle sur un écran d'affichage (14) ou de manière audible ou par vibration ou par n'importe quelle autre technique ou leur combinaison.

7. Support lisible par ordinateur stockant des instructions exécutables par ordinateur sur ce dernier qui, lorsqu'elles sont exécutées par un processeur dans un dispositif électronique portable (10) ayant au moins une batterie rechargeable (56) et un système de pile à combustible (49), amène le dispositif à réaliser le procédé selon l'une quelconque des revendications précédentes.
